# EUROPÄISCHE PATENTSCHRIFT

(11) **EP 2 869 531 B1**
(45) Veröffentlichungstag und Bekanntmachung des Hinweises auf die Patenterteilung: **04.10.2017**
(21) Anmeldenummer: 13190609.1
(22) Anmeldetag: 29.10.2013
(51) Int. Cl.: H04L 29/08, H04L 12/24, H04W 4/00, H04M 1/72, H04L 29/12, G06F 17/30, H04W 88/02, G06Q 30/06, G06Q 50/32, H04M 1/725, G06F 9/445, H04W 12/04, H04W 12/12

(54) **VERFAHREN ZUR INSTALLATION EINER ANWENDUNG AUF EINEM MOBILEN TELEKOMMUNIKATIONSGERÄT**
METHOD FOR INSTALLING AN APPLICATION ON A MOBILE TELECOMMUNICATION DEVICE
PROCÉDÉ D'INSTALLATION D'UNE APPLICATION SUR UN APPAREIL DE TÉLÉCOMMUNICATION MOBILE

(43) Veröffentlichungstag der Anmeldung: 06.05.2015
(73) Patentinhaber: Morpho Cards GmbH, 24220 Flintbek (DE)
(72) Erfinder: Winter, Christian, 33378 Rheda-Wiedenbrück (DE); Horvat, Nikolaj, 33102 Paderborn (DE); Lotz, Andreas, 59494 Soest (DE)
(74) Vertreter: Richardt Patentanwälte PartG mbB

(56) Entgegenhaltungen:
- WO-A1-2005/086504
- US-A1- 2004 176 080
- US-A1- 2012 042 008
- US-A1- 2013 124 606
- US-A1- 2013 219 065
- "Smart Cards; Card Application Toolkit (CAT) (Release 11)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, Bd. SCP TEC, Nr. V11.2.0, 1. Juli 2013 (2013-07-01), XP014156940,

## Beschreibung

Die vorliegende Erfindung betrifft ein Verfahren zur Installation einer Anwendung auf einem mobilen Telekommunikationsgerät, die Verwendung einer SIM-Karte in einem solchen Verfahren sowie die Verwendung eines Servers in einem solchen Verfahren.

Mobile Telekommunikationsgeräte wie Smartphones oder Tablet-PCs können über Steckplätze für SIM-Karten verfügen. Eine SIM-Karte (Subscriber Identify Module) ist eine Chipkarte, die in das mobile Telekommunikationsgerät eingesteckt werden kann, um damit eine Identifikation des mobilen Telekommunikationsgeräts in einem Telekommunikationsnetzwerk zu ermöglichen. Üblicherweise stellen Mobilfunkanbieter die SIM-Karte Endteilnehmern zur Verfügung.

Mit dem Zurverfügungstellen von SIM-Karten geht bei Mobilfunkanbietern auch der Wunsch einher, dass das zusammen mit der SIM-Karte verwendete Telekommunikationsgerät an die Anforderungen des Mobilfunkanbieters angepasst wird.

Wird das Telekommunikationsgerät zusammen mit der SIM-Karte ausgeliefert, ist der Mobilfunkanbieter zuvor in der Lage, direkt eine entsprechende Modifikation und Anpassung der auf dem Telekommunikationsgerät verwendeten Software vor Auslieferung an den Endkunden vorzunehmen. Wird hingegen lediglich die SIM-Karte an den Endkunden ausgeliefert, ist solch eine Modifikation gegebenenfalls nachträglich notwendig.

Die WO 2005/086504 A1 offenbart ein Verfahren und ein System zur Auswahl einer Downloadtechnologie zum Downloaden von Informationen auf ein Gerät. In einem Mobilfunkgerät mit einer SIM-Karte kann zum Beispiel die SIM-Karte so programmiert sein, dass der "Launch Browser"-Befehl des Toolkits mit einer vorgegebenen URL ausgeführt wird.

Im Rahmen der gesamten Beschreibung wird unter einem mobilen Telekommunikationsgerät ein Telekommunikationsgerät verstanden, welches ein Benutzer mit sich führen kann und welches in der Lage ist, über ein Mobilfunknetzwerk eine Telekommunikationsverbindung mit einer Gegenstelle aufzubauen. Mobile Telekommunikationsgeräte sind wie bereits oben erwähnt Smartphones, Handys, Tablet-PCs und allgemein viele tragbare Datenverarbeitungseinrichtungen mit Telekommunikationsschnittstelle, welche über eine SIM-Karte über ein Mobilfunknetzwerk kommunizieren können.

Der Erfindung liegt die Aufgabe zugrunde, ein verbessertes Verfahren zur Installation einer Anwendung auf einem mobilen Telekommunikationsgerät, die Verwendung einer SIM-Karte in einem solchen Verfahren und die Verwendung eines Servers in einem solchen Verfahren bereitzustellen.

Die der Erfindung zugrunde liegenden Aufgaben werden durch die Merkmale der unabhängigen Patentansprüche gelöst. Bevorzugte Ausführungsformen der Erfindung sind in den abhängigen Patentansprüchen angegeben.

Es wird ein Verfahren zur Installation einer Anwendung auf einem mobilen Telekommunikationsgerät angegeben, wobei das mobile Telekommunikationsgerät eine SIM-Karte aufweist, wobei die SIM-Karte ein SIM Application Toolkit, STK aufweist, wobei das Verfahren umfasst:
- Senden des Launch-Browser Kommandos des STK von der SIM-Karte an das mobile Telekommunikationsgerät, wobei das Launch-Browser Kommando eine erste URL angibt, wobei die erste URL vordefiniert auf der SIM-Karte gespeichert ist, wobei die erste URL unmittelbar und direkt auf einen ersten Server in einem Netzwerk verweist, wobei die erste URL nicht auf die zu installierende Anwendung verweist,
- Nach Empfang des Launch-Browser Kommandos durch das mobile Telekommunikationsgerät, Aufrufen der ersten URL durch einen Browser des mobilen Telekommunikationsgeräts über das Netzwerk,
- Empfangen des Aufrufs der ersten URL durch den ersten Server und Umwandeln der ersten URL in eine zweite URL durch den ersten Server, wobei die zweite URL auf die Anwendung verweist, wobei die Umwandlung der ersten URL in die zweite URL so erfolgt, dass die Umwandlung durch den Browser des mobilen Telekommunikationsgeräts feststellbar ist,
- Feststellen der Umwandlung durch das mobile Telekommunikationsgerät und aufgrund dieser Feststellung, Aufrufen der zweiten URL über das Netzwerk durch den Browser des mobilen Telekommunikationsgeräts, wobei aufgrund Aufrufs der zweiten URL das mobile Telekommunikationsgerät den Aufruf unterbindet und die zweite URL an eine Internet-Verkaufsportal-Anwendung des mobilen Telekommunikationsgeräts übermittelt, wobei die Internet-Verkaufsportal-Anwendung zur Verwaltung von auf dem mobilen Telekommunikationsgerät installierter Anwendungen ausgebildet ist,
- Aufrufen der zweiten URL über das Netzwerk durch die Internet-Verkaufsportal-Anwendung, wobei aufgrund des Aufrufens der zweiten URL die Anwendung durch den ersten Server auf das mobile Telekommunikationsgerät über das Netzwerk übertragen wird,
- Installation der Anwendung auf dem mobilen Telekommunikationsgerät.

Bei dem SIM Applikation Toolkit handelt es sich um einen Standard des GSM-Systems (vergleiche GSM-Spezifikation TS 51.014), welche es der SIM-Karte ermöglicht, direkten Zugriff auf Funktionen des Mobiltelefon wie Ansteuerung des Displays, Abfrage der Tastatur, Versenden von Kurznachrichten und einige weitere Funktionen, die in Zusammenhang mit einer Zusatzanwendung durchgeführt werden können, zu ermöglichen. Das "Launch Browser"-Kommando ermöglicht dabei den Start eines Browsers auf dem mobilen Telekommunikationsgerät.

Bei einer URL handelt es sich um einen sogenannten Uniform-Ressource-Locator, welcher in der Lage ist, eine Ressource wie zum Beispiel eine Webseite zu identifizieren und zu lokalisieren. Eine URL kann beispielsweise eine Internetadresse oder Webadresse bezeichnen.

Ausführungsformen der Erfindung könnten den Vorteil haben, dass durch einen Mobilfunkanbieter flexibel die Installation und damit auch die Aktualisierung von Anwendungen auf einem mobilen Telekommunikationsgerät ermöglicht wird, in welchem eine SIM-Karte des Mobilfunkanbieters Verwendung finden soll. Dabei ist es für den Mobilfunkanbieter nicht notwendig, im Voraus Zugriff auf das mobile Telekommunikationsgerät selbst zu haben. Über die Verwendung des Launch Browser-Befehls des SIM-Toolkits und der Angabe einer URL ist es möglich, die besagte Anwendung zu installieren.

Ferner könnte durch das beschriebene Verfahren gewährleistet werden, dass die Anwendung ausschließlich über die Internetverkaufsportalanwendung des mobilen Telekommunikationsgeräts installiert wird. Solche Internetverkaufsportalanwendungen wie beispielsweise die Google Playstore-Anwendung oder die Apple Appstore-Anwendung verfügen über eine Anzahl von Fähigkeiten, welche beispielsweise die Verwaltung installierter Anwendungen vereinfacht. Wird beispielsweise eine Anwendung über eine Verkaufsportalanwendung installiert, so ist diese automatisiert über die Verkaufsportalanwendung aktualisierbar. Außerdem ist die Verkaufsportalanwendung in der Lage, über die installierte Anwendung weitere Informationen, die eine Programmentwicklungshistorie sowie eine Risikobewertung für das Vorliegen von Adware oder Malware betreffen, anzuzeigen.

Dadurch, dass nun zwar der Launch Browser-Befehl des SIM-Application Toolkit verwendet wird, jedoch die mit dem Launch Browser-Kommando angegebene erste URL in eine zweite URL umgewandelt wird, wird sichergestellt, dass nicht etwa der Browser des mobilen Telekommunikationsgeräts (indirekt) die über die erste URL erhältliche Anwendung auf dem mobilen Telekommunikationsgerät Installationsgerät installiert, sondern ausschließlich die Internetverkaufsportalanwendung unter direktem unmittelbaren Zugriff auf die zweite URL.

Bei dem beschriebenen Netzwerk kann es sich beispielsweise um das Internet oder ein mobiles Telekommunikationsnetzwerk über eine GSM- oder UMTS-Schnittstelle des mobilen Telekommunikationsgeräts handeln.

Google Play ist eine cloud-basierte Plattform des Unternehmens Google, die Spiele, Musik, Bücher, Filme und Anwendungen für unterstützte Geräte anbietet. Das Programm Google Play Store ist auf den meisten Android-Geräten bereits vorinstalliert. Der App Store ist ein von Apple eingeführtes Internet-Verkaufsportal für Computerprogramme, die ausschließlich auf iOS-Geräten (iPhone, iPod touch, iPad) laufen. Bei direktem Zugriff auf den App Store mittels iPhone, iPad oder iPod touch erfolgt eine direkte Installation der Applikation auf dem Gerät, und die Applikation wird bei der nächsten Synchronisation mit dem heimischen Computer in die iTunes-Mediathek aufgenommen.

Nach einer Ausführungsform der Erfindung erfolgt das Unterbinden des Aufrufs der zweiten URL durch ein Betriebssystem des mobilen Telekommunikationsgeräts automatisch, wobei das Betriebssystem ein Android-Betriebssystem oder ein Apple-Betriebssystem ist. Im Falle des Android-Betriebssystems ist die Internetverkaufsportalanwendung zum Beispiel durch die Google Play Store-Anwendung gegeben und im Falle des Apple-Betriebssystems ist die Internetverkaufsportalanwendung durch die Apple App Store-Anwendung gegeben.

Es sei an dieser Stelle angemerkt, dass allgemein das obig beschriebene Verfahren zur Installation der Anwendung auf dem mobilen Telekommunikationsgerät durch die Internetverkaufsportalanwendung geeignet ist, unabhängig von einer etwaig beliebig gestalteten Reaktion des Betriebssystems des mobilen Telekommunikationsgeräts auf dem Empfang des Launch Browser-Kommandos. Zwar könnte im Launch Browser-Kommando direkt die zweite URL angegeben werden. Dann müsste jedoch durch das Betriebssystem des mobilen Telekommunikationsgeräts sichergestellt werden, dass die zweite URL daraufhin ausschließlich durch die Internetverkaufsportalanwendung direkt aufgerufen wird und nicht etwa durch den Browser des mobilen Telekommunikationsgeräts. Durch das obig beschriebene Verfahren ist eine solche Ausgestaltung des Betriebssystems jedoch nicht mehr Voraussetzung und grundsätzlich könnte sichergestellt sein, dass die Anwendung auf dem mobilen Telekommunikationsgerät ausschließlich durch die Internetverkaufsportalanwendung installiert wird.

Es sei angemerkt, dass im Rahmen der gesamten Beschreibung eine "Installation der Anwendung auf dem mobilen Telekommunikationsgerät" so verstanden wird, dass die Anwendung unter Veranlassung der Internetverkaufsportalanwendung auf dem mobilen Telekommunikationsgerät installiert wird. Möglich ist dabei, dass entweder die Internetverkaufsportalanwendung selbst direkt und unmittelbar eine Installationsroutine durchführt zur Installation der Anwendung auf dem mobilen Telekommunikationsgerät oder dass die Internetverkaufsportalanwendung selbst eine weitere Routine startet, welche in der Lage ist, auf Befehl der Internetverkaufsportalanwendung die Anmeldung auf dem mobilen Telekommunikationsgerät zu installieren. Initiator ist jedoch grundsätzlich die Internetverkaufsportalanwendung.

Nach einer Ausführungsform der Erfindung verweist die zweite URL auf einen zweiten Server, wobei auf dem zweiten Server die Anwendung unter der URL abrufbar gespeichert ist. Damit ist es grundsätzlich möglich, zum Einen einen ersten Server bereitzustellen, welcher auf die Umwandlung von URLs spezialisiert ist, und auf der anderen Seite einen zweiten Server bereitzustellen, welcher für die Bereitstellung von Anwendungen für mobile Telekommunikationsgeräte spezialisiert ist.

Nach einer Ausführungsform der Erfindung erfolgt das Umwandeln der ersten URL in die zweite URL durch eine Domainweiterleitung oder einen automatischen Aufruf der zweiten URL über einen in der durch die erste URL aufgerufenen Webseite eingebetteten htfip-Refresh-Befehl.

Eine Domainweiterleitung wird dabei verwendet, um eine Domain an eine andere Hostadresse weiterzuleiten. Dabei kann gezielt entweder nur der Domainname ersetzt werden oder aber eine Weiterleitung kann auch auf eine feste Seite inklusive Verzeichnisstruktur gelegt werden.

Nach einer Ausführungsform der Erfindung umfasst der Aufruf der ersten URL eine Angabe eines User-Agents, wobei der erste Server die Umwandlung der ersten URL in die zweite URL in Abhängigkeit von der Angabe des User-Agents durchführt, wobei die zweite URL spezifisch für den User-Agent ist. Unter dem User-Agent wird dabei im Rahmen der Beschreibung eine Information zum durch das mobile Telekommunikationsgerät verwendeten Browsers, des Betriebssystems oder der Hardware des mobilen Telekommunikationsgeräts verstanden. Webbrowser verwenden zum Aufruf von Webseiten das Protokoll HTTP, normiert in dem Standard RFC2616. Dieser Standard sieht einen Header namens "User-Agent" zur Übertragung des Namens der Version der Browsersoftware an den Webserver vor. Der U-ser-Agent Header in HTTP enthält Namen, Version und Kommentar zu einer oder mehreren Komponenten des Clients (Browsers). Das Kommentarfeld ist optional, sein Inhalt nicht weiter normiert. Beispielsweise könnte in diesem Kommentarfeld eine maschinenlesbare Information zum Betriebssystem oder zur besagten Hardware des mobilen Telekommunikationsgeräts untergebracht werden.

Die Angabe des User-Agents und die Umwandlung der ersten URL in die zweite URL in Abhängigkeit von der Angabe des User-Agents könnte den Vorteil haben, dass für das mobile Telekommunikationsgerät nur solche Anwendungen bereitgestellt werden, welche für das mobile Telekommunikationsgerät besonders nützlich und maßgeschneidert sind. Umfasst der User-Agent beispielsweise eine Angabe der Version des Betriebssystems des mobilen Telekommunikationsgeräts, so könnte mittels des obig beschriebenen Verfahrens eine Aktualisierung des Betriebssystems oder Teile des Betriebssystems oder einzelner bereits installierter Anwendungen durch die Installation der obig beschriebenen Anwendung bewirkt werden. Umfasst der User-Agent eine Angabe der Hardware-Information des mobilen Telekommunikationsgeräts könnte sichergestellt werden, dass nur eine solche spezifische Anwendung auf dem mobilen Telekommunikationsgerät installiert wird, welche durch die Hardware des mobilen Telekommunikationsgeräts auch tatsächlich verarbeitet werden kann. In diesem Fall könnte beispielsweise eine solche Anwendung bereitgestellt werden, welche gänzlich auf Befehle verzichtet, welche durch die Hardware des mobilen Telekommunikationsgeräts überhaupt nicht verarbeitet werden könnten. Insgesamt könnte denkbar sein, dass ein zentraler Server mit einer Vielzahl von verschiedenen Anwendungen bereitgestellt wird, wobei diese Anwendungen spezifisch sind für verschiedene Betriebssysteme und Hardwareplattformen von mobilen Telekommunikationsgeräten.

Die Nachinstallation von durch den Mobilfunkanbieter spezifizierten Anwendungen über den Launch Browser-Befehl könnte damit die Installation von Anwendungen auf dem mobilen Telekommunikationsgerät umfassen, welche speziell angepasst sind an die verwendete Hardware des mobilen Telekommunikationsgeräts und/oder das durch den Mobilfunkanbieter verwendete Datenübertragungsverfahren, mittels welchem unter Verwendung der SIM-Karte eine Datenübertragung oder eine Kommunikation in dem mobilen Telekommunikationsnetzwerk des Mobilfunkanbieters durchgeführt werden kann. Datenübertragungsverfahren umfassen die zunächst grundlegende Funktechnik wie CDMA oder WCDMA, der verwendete Code, das verwendete Duplexverfahren, Kanalabstand, Chiprate, usw.

Nach einer Ausführungsform der Erfindung umfasst der User-Agent eine Angabe der Version des Betriebssystems des mobilen Telekommunikationsgeräts, wobei der erste Server die Umwandlung der ersten URL in die zweite URL in Abhängigkeit von der Angabe der Version des Betriebssystems durchführt, wobei die zweite URL spezifisch für die Version des Betriebssystems ist. So könnten beispielsweise Anwendungen bereitgestellt werden, welche spezifisch für die Version des Betriebssystems oder allgemein für Versionen von Betriebssystemen bereitgestellt werden, welche eine Versionsnummer kleiner als eine vorgegebene Versionsnummer aufweisen.

Durch eine Aktualisierung von Teilen des Betriebssystems durch die Installation der besagten Anwendung kann das grundsätzliche Kommunikationsverhalten des mobilen Telekommunikationsgeräts bei Kommunikation über das mobile Telekommunikationsnetzwerk des Mobilfunkanbieters unter Verwendung der SIM-Karte optimiert, beispielsweise beschleunigt werden. So könnten Datenpaketgrößen optimiert werden, welche über das mobile Telekommunikationsgerät übertragen werden. Ferner könnten Latenzzeiten minimiert werden.

Nach einer Ausführungsform der Erfindung umfasst der User-Agent eine Angabe einer Hardwareinformation des mobilen Telekommunikationsgeräts, wobei der erste Server die Umwandlung der ersten URL in die zweite URL in Abhängigkeit von der Angabe der Hardwareinformation durchführt, wobei die zweite URL spezifisch für die Hardwareinformation ist.

Nach einer Ausführungsform der Erfindung umfasst das Verfahren ferner ein Prüfen durch das SIM Application Toolkit, ob die SIM-Karte zum ersten Mal durch das mobile Telekommunikationsgerät oder zum ersten Mal für das Betriebssystem des mobilen Telekommunikationsgeräts verwendet wird, wobei der die erste URL angebende Launch Browser-Befehl ausschließlich dann an das mobile Telekommunikationsgerät gesendet wird, wenn die Prüfung ergibt, dass die SIM-Karte zum ersten Mal durch das mobile Telekommunikationsgerät oder zum ersten Mal für das Betriebssystem des mobilen Telekommunikationsgeräts verwendet wird.

Dies könnte den Vorteil haben, dass nicht mit jedem Neustart des mobilen Telekommunikationsgeräts versucht wird, die erste URL durch den Browser aufzurufen. Mit der einmaligen Installation der besagten Anwendung könnte sich beispielsweise der Mobilfunkanbieter sicher sein, dass insbesondere durch die automatisierte Aktualisierungsfunktion, welche in Internetverkaufsportalanwendungen verfügbar ist, die installierte Anwendung aktuell gehalten wird. Ein ständiges Neuaufrufen und Versuchen der Installation der Anwendung auf dem mobilen Telekommunikationsgerät wird damit überflüssig und das Datenübertragungsaufkommen über das Netzwerk wird minimiert.

In einem weiteren Aspekt betrifft die Erfindung ein Computerprogrammprodukt mit für einen Prozessor ausführbaren Instruktionen zur Durchführung der obig beschriebenen Verfahrensschritte.

In einem weiteren Aspekt betrifft die Erfindung die Verwendung einer SIM-Karte in einem obig beschriebenen Verfahren, wobei die SIM-Karte dazu ausgebildet ist, ein Launch-Browser Kommando des STK von der SIM-Karte an das mobile Telekommunikationsgerät zu senden, wobei das Launch-Browser Kommando eine erste URL angibt, wobei die erste URL vordefiniert auf der SIM-Karte gespeichert ist, wobei die erste URL auf einen ersten Server in einem Netzwerk verweist, wobei die erste URL nicht auf die zu installierende Anwendung verweist.

In einem weiteren Aspekt betrifft die Erfindung die Verwendung eines ersten Servers in einem obig beschriebenen Verfahren.

Im Folgenden werden bevorzugte Ausführungsformen der Erfindung mit Bezugnahme auf die Zeichnungen näher erläutert. Es zeigen:
- Figur 1: eine schematische Ansicht eines Systems, in welchem das beschriebene Verfahren Anwendung finden könnte,
- Figur 2: eine schematische Ansicht eines Flussdiagramms eines Verfahrens zur Installation einer Anwendung auf einem mobilen Telekommunikationsgerät.

Im Folgenden werden einander ähnliche Elemente mit den gleichen Bezugszeichen gekennzeichnet.

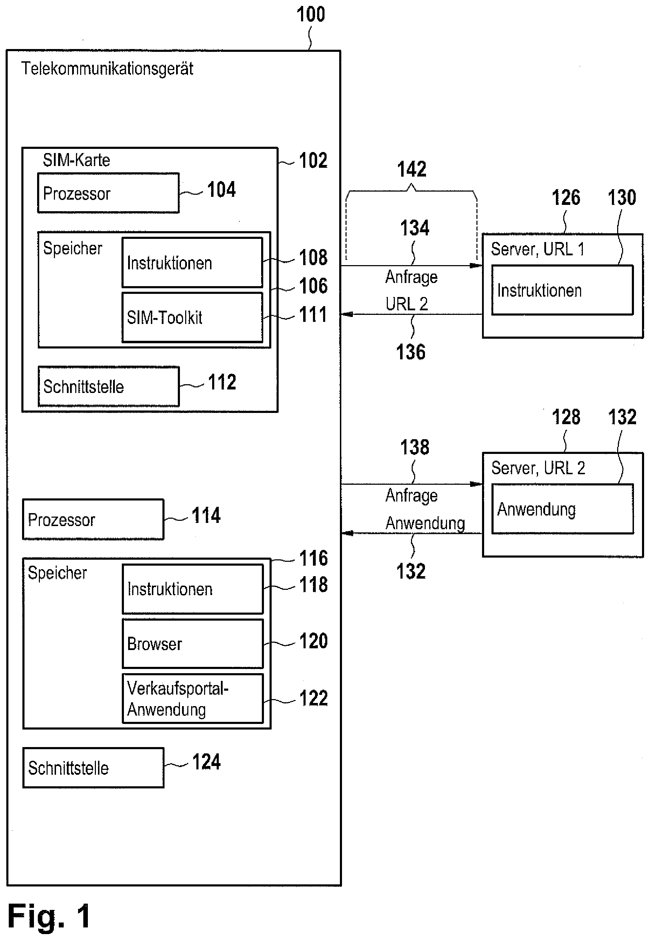

Die Figur 1 zeigt ein Blockdiagramm von verschiedenen Komponenten in einem Netzwerk. Die Komponenten umfassen ein mobiles Telekommunikationsgerät 100, einen Server 126 und einen Server 128. Das mobile Telekommunikationsgerät 100 ist in der Lage, über ein Netzwerk 142, welches hier lediglich schematisch dargestellt ist, mit dem Server 126 bzw. dem Server 128 zu kommunizieren. Beispielsweise handelt es sich bei dem Netzwerk 142 um ein mobiles Telekommunikationsgerät wie beispielsweise ein UMTS-Netz.

Das mobile Telekommunikationsgerät 100 weist einen Steckplatz (z.B. Einschubplatz) für eine SIM-Karte 102 auf. Im Folgenden sei davon ausgegangen, dass sich die SIM-Karte 102 zum ersten Mal in dem Telekommunikationsgerät 100 befindet. Das mobile Telekommunikationsgerät 100 weist einen Prozessor und einen Speicher 116 zur Speicherung von durch den Prozessor 114 ausführbaren Instruktionen 118 auf. Weiter sind in dem Speicher 116 ein Browserprogramm 120 und eine Internetverkaufsportalanwendung 122 gespeichert. Über eine Schnittstelle 124 ist das mobile Telekommunikationsgerät 100 in der Lage, über das Netzwerk 142 mit dem Server 126 bzw. dem Server 128 zu kommunizieren.

Die SIM-Karte 102 verfügt ebenfalls über eine Schnittstelle 112, über welche sie in der Lage ist, mit dem mobilen Telekommunikationsgerät 100 zu kommunizieren. Ein Prozessor 104 der SIM-Karte ist in der Lage, Instruktionen 108 auszuführen, welche im Speicher 106 der SIM-Karte 102 gespeichert sind. Im Speicher 102 ist ferner ein SIM-Application-Toolkit gespeichert, welches Chipkartenkommandos definiert.

Eines dieser Kommandos ist der "Launch Browser"-Befehl, weicher zusammen mit einer URL1, also zum Beispiel eine Internetadresse wie www.server.com/update, an das mobile Telekommunikationsgerät 100 übermitteln kann. Die Übermittlung erfolgt dabei über die Schnittstelle 112.

Teile der Instruktionen 108 können beispielsweise eine Überprüfung vorsehen, ob die SIM-Karte 102 zum ersten Mal in dem mobilen Telekommunikationsgerät 100 verwendet wird. Wenn dies der Fall ist, wird ebenfalls aufgrund der Instruktionen 108 das Launch Browser-Kommando des SIM-Toolkits 111 an das mobile Telekommunikationsgerät zusammen mit der URL1 übermittelt.

Das Betriebssystem des Telekommunikationsgeräts 100 startet daraufhin den Browser 120 des Telekommunikationsgeräts. Dieser Browser ruft dann mittels einer Anfrage 134 die URL1 des Servers 126 auf.

Der Server 126 wiederum verfügt über Instruktionen, um beispielsweise mittels einer Domainweiterleitung die URL1 in eine URL2 (Bezugszeichen 136) umzuwandeln. Bei der URL2 könnte es sich dann um eine Internetadresse wie www.server2.com/anwendung.apk handeln.

Beispielsweise könnte in der Anfrage 134 eine aktuelle Version des Betriebssystems des Telekommunikationsgeräts 100 beinhaltet sein. Beispielsweise könnte diese Version des Betriebssystems die Bezeichnung v1.0 sein. Durch die Instruktionen 130 könnte der Server 126 überprüfen, ob eine neuere Betriebssystemversion vorliegt. Gibt es beispielsweise eine Betriebssystemversion v2.0, so könnte die durch den Server 126 verursachte Weiterleitung auf die URL2 so gewählt sein, dass die URL2 auf eine Anwendung verweist, welche entweder einer Aktualisierung des Betriebssystems entspricht oder aber auf eine Anwendung verweist, welche in der Lage ist, mit diesem veralteten Betriebssystem v1.0 umzugehen. Letzteres könnte von Bedeutung sein, wenn neuere Versionen von Anwendungen zwischenzeitlich entwickelt wurden, welche mit alten Betriebssystemversionen überhaupt nicht mehr umgehen können.

Nachdem also der Server 126 und seine Instruktionen 130 die Umwandlung der URL1 in die URL2 vorgenommen hat, wird diese URL2 dem Telekommunikationsgerät 100 mitgeteilt. Der Browser 120 versucht daraufhin, die URL2 aufzurufen.

Nun ist jedoch vorgesehen, dass die URL2 direkt auf die Anwendung 132 verweist, welche auf dem Telekommunikationsgerät 100 installiert werden soll. Der Aufruf der URL2 durch den Browser 120 wird durch das Telekommunikationsgerät 100 detektiert und automatisch sofort unterbunden. Dies ist ein Vorgang, welcher Android-Betriebssystembedingt immer durchgeführt wird. Stattdessen wird nun die im Speicher 110 gespeicherte Internetverkaufsportalanwendung, wie beispielsweise der Google Playstore im Falle eines Android-Betriebssystems, gestartet und die Internetverkaufsportalanwendung 122 wird nun in einer Anfrage 138 die URL2 aufrufen.

Als Ergebnis wird der Server 128 die über die URL2 verfügbare Anwendung 132 an das mobile Telekommunikationsgerät 100 übermitteln. Daraufhin erfolgt eine Installation der Anwendung 132 auf dem mobilen Telekommunikationsgerät 100.

Es sei an dieser Stelle angemerkt, dass es insbesondere Android-BetriebssystemVersionen gibt, welche nicht in der Lage sind, eine mittels des Launch Browser-Befehls des SIM-Toolkits spezifizierte URL2 direkt mit der Internetverkaufsportalanwendung zu verarbeiten. Stattdessen wird grundsätzlich der Browser 120 aufgerufen, was zwar letztlich eine Installation der Anwendung 132 auf dem Telekommunikationsgerät 100 ermöglicht, jedoch nicht die automatische Einbeziehung der Verkaufsportalanwendung 122 nach sich zieht. Durch das beschriebene Verfahren ist es möglich, in vordefinierter Weise und unabhängig von der Version des Betriebssystems zu gewährleisten, dass immer die Anwendung 132, im obigen Beispiel die Anwendung "anwendung.apk" durch die Internetverkaufsportalanwendung installiert wird.

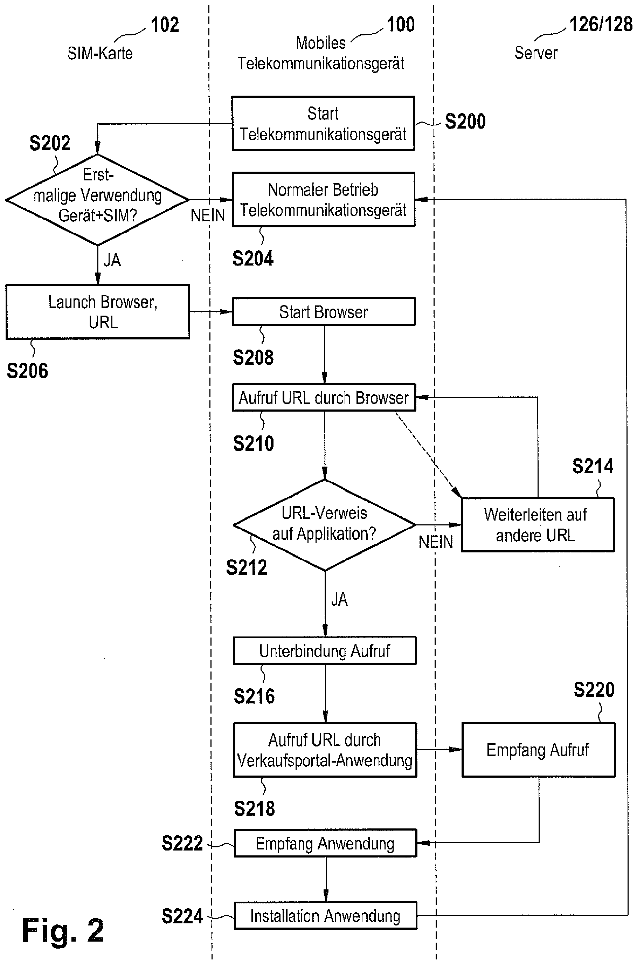

Die Figur 2 zeigt ein Flussdiagramm eines Verfahrens zur Installation einer Anwendung auf einem mobilen Telekommunikationsgerät. Die Verfahrensschritte sind dabei in drei Spalten unterteilt, je nachdem, ob die Verfahrensschritte auf der SIM-Karte 102, dem mobilen Telekommunikationsgerät 100 oder dem/den Servern 126/128 durchgeführt werden.

In Schritt S200 wird zunächst das Telekommunikationsgerät gestartet. Auf der SIM-Karte 102 wird in Schritt S202 geprüft, ob die SIM-Karte zum ersten Mal in dem mobilen Telekommunikationsgerät 100 verwendet wird. Ist dies nicht der Fall, das heißt die SIM-Karte wurde schon einmal zuvor im mobilen Telekommunikationsgerät verwendet, so fährt das Verfahren in Schritt S204 mit dem normalen Betrieb des Telekommunikationsgeräts fort. Das mobile Telekommunikationsgerät kann also hier sofort in üblicher Weise verwendet werden, zum Beispiel zur Telefonie- und Datenübertragungszwecken über das mobile Telekommunikationsnetzwerk, in welches sich das mobile Telekommunikationsgerät über die SIM-Karte eingewählt hat.

Wird in Schritt S202 festgestellt, dass die SIM-Karte zum ersten Mal in dem mobilen Telekommunikationsgerät 100 verwendet wird, so erfolgt in Schritt S206 die Übermittlung des Launch Browsers-Befehls des SIM-Application Toolkits der SIM-Karte, zusammen mit einer URL an das mobile Telekommunikationsgerät. Das mobile Telekommunikationsgerät startet daraufhin in Schritt S208 den Browser und versucht in Schritt 210, die im Launch Browser-Befehl angegebene URL aufzurufen.

Der nachfolgende Schritt S212 ist an dieser Stelle optional und könnte von verschiedenen Betriebssystemversionen nicht unterstützt werden. Sollte der Schritt unterstützt werden, so wird in Schritt S212 zunächst festgestellt, dass die URL nicht auf eine über eine Internetverkaufsportal-Anwendung installierbare Applikation verweist, sodass in üblicher Weise die Anfrage weitergeleitet wird an den Server 126/128. Wenn diese Überprüfung seitens des Betriebssystems nicht explizit stattfindet, so kann mit dem Aufruf der URL durch den Browser in Schritt S210 direkt die Anfrage an den Server 126/128 weitergeleitet werden.

In jedem Fall ist die Reaktion des Servers daraufhin die Weiterleitung auf eine andere URL (Schritt S214). Die weitere URL verweist dabei auf die besagte Anwendung, welche über die Internetverkaufsportal-Anwendung installierbar ist. Diese Weiterleitung wird dem Browser des mobilen Telekommunikationsgeräts mitgeteilt und der Browser versucht daraufhin, diese andere URL aufzurufen. Da die andere URL jedoch dieses Mal eine Anwendung, zum Beispiel eine Anwendung in der Form Anwendung.apk, angibt, wird nun durch das Betriebssystem des mobilen Telekommunikationsgeräts 100 in Schritt 212 detektiert, dass die URL nicht auf eine Webseite, sondern auf eine Applikation (erkennt!ich an der Endung apk in dem Beispiel bei Android-Betriebssystemen) verweist.

In anderen Worten könnte der initiale Aufruf der URL durch den Browser, initiiert durch den Launch Browser-Befehl, gegebenenfalls durch das Betriebssystem des mobile Telekommunikationsgeräts, nicht abgefangen werden und stattdessen erst nach Weiterleitung auf eine andere URL eine solche Detektion eines URL-Verweises auf eine Applikation festgestellt werden. Vollkommen unabhängig davon, wie jedoch nun das Betriebssystem des mobilen Tetekommunikationsgeräts im Einzelfall reagiert, ist sichergestellt, dass durch die genau gewählte Abfolge der Verfahrensschritte gewährleistet wird, dass durch die durch den Launch Browser-Befehl initiierte Schrittfolge eine gewünschte Applikation auf dem mobilen Telekommunikationsgerät installiert wird.

Mit der Unterbindung des Aufrufs der Applikation durch den URL-Verweis (Schritt S216) erfolgt in Schritt S218 der Aufruf dieser URL durch die Internetverkaufsportalanwendung, welche auf dem mobilen Telekommunikationsgerät 100 installiert ist. Der Aufruf der URL wird in Schritt S220 durch den Server empfangen und der Server übermittelt daraufhin die Anwendung an das mobile Telekommunikationsgerät, wobei die Anwendung in Schritt S222 empfangen wird.

In Schritt S224 erfolgt die Installation der Anwendung auf dem mobilen Telekommunikationsgerät, wobei die Installation der Anwendung durch die Internetverkaufsportalanwendung des mobilen Telekommunikationsgeräts registriert wird. Die Internetverkaufsportalanwendung kann daraufhin zum Beispiel die installierte Anwendung in eine Überwachung aufnehmen, sodass eine automatisierte Aktualisierung der installierten Anwendung stattfindet, wenn eine aktualisierte Version der Anwendung zur Verfügung steht. Die aktualisierte Version der Anwendung kann unter derselben URL verfügbar sein, von welcher sie auch abgerufen wurde. Es ist jedoch auch möglich, dass die Internetverkaufsportalanwendung in an sich bekannter Weise über eine Internetadresse verfügt, unter welcher aktualisierte Versionen von verschiedenen Anwendungen bezogen werden können.

### Bezugszeichenliste

- 100: Telekommunikationsgerät
- 102: SIM-Karte
- 104: Prozessor
- 106: Speicher
- 108: Instruktionen
- 111: SIM-Toolkit
- 112: Schnittstelle
- 114: Prozessor
- 116: Speicher
- 118: Instruktionen
- 120: Browser
- 122: Internetverkaufsportalanwendung
- 124: Schnittstelle
- 126: Server
- 128: Server
- 130: Instruktionen
- 132: Anwendung
- 134: Anfrage
- 136: URL
- 138: Anfrage
- 142: Netzwerk

## Patentansprüche

1. Verfahren zur Installation einer Anwendung (132) auf einem mobilen Telekommunikationsgerät (100), wobei das mobile Telekommunikationsgerät (100) eine SIM-Karte (102) aufweist, wobei die SIM-Karte (102) ein SIM Application Toolkit, STK (111) aufweist, wobei das Verfahren umfasst:
- Senden des Launch-Browser Kommandos des STK (111) von der SIM-Karte (102) an das mobile Telekommunikationsgerät (100), wobei das Launch-Browser Kommando eine erste URL angibt, wobei die erste URL vordefiniert auf der SIM-Karte (102) gespeichert ist, wobei die erste URL unmittelbar und direkt auf einen ersten Server (126) in einem Netzwerk (142) verweist, wobei die erste URL nicht auf die zu installierende Anwendung (132) verweist,
- Nach Empfang des Launch-Browser Kommandos durch das mobile Telekommunikationsgerät (100), Aufrufen der ersten URL durch einen Browser (120) des mobilen Telekommunikationsgeräts über das Netzwerk (142),
- Empfangen des Aufrufs der ersten URL durch den ersten Server und Umwandeln der ersten URL in eine zweite URL durch den ersten Server (126), wobei die zweite URL auf die Anwendung (132) verweist, wobei die Umwandlung der ersten URL in die zweite URL so erfolgt, dass die Umwandlung durch den Browser (120) des mobilen Telekommunikationsgeräts (100) feststellbar ist,
- Feststellen der Umwandlung durch das mobile Telekommunikationsgerät (100) und aufgrund dieser Feststellung, Aufrufen der zweiten URL über das Netzwerk (142) durch den Browser (120) des mobilen Telekommunikationsgeräts, wobei aufgrund Aufrufs der zweiten URL das mobile Telekommunikationsgerät (100) den Aufruf unterbindet und die zweite URL an eine Internet-Verkaufsportal-Anwendung (122) des mobilen Telekommunikationsgeräts übermittelt, wobei die Internet-Verkaufsportal-Anwendung (122) zur Verwaltung von auf dem mobilen Telekommunikationsgerät (100) installierter Anwendungen ausgebildet ist,
- Aufrufen der zweiten URL über das Netzwerk durch die Internet-Verkaufsportal-Anwendung (122), wobei aufgrund des Aufrufens der zweiten URL die Anwendung (132) durch den ersten Server (126) auf das mobile Telekommunikationsgerät (100) über das Netzwerk (142) übertragen wird,
- Installation der Anwendung (132) auf dem mobilen Telekommunikationsgerät (100).

2. Verfahren nach Anspruch 1, wobei das Unterbinden des Aufrufs der zweiten URL durch ein Betriebssystem des mobilen Telekommunikationsgeräts automatisch erfolgt.

3. Verfahren nach einem der vorigen Ansprüche, wobei die zweite URL auf einen zweiten Server (128) verweist, wobei auf dem zweiten Server (128) die Anwendung (132) unter der URL abrufbar gespeichert ist.

4. Verfahren nach einem der vorigen Ansprüche, wobei das Umwandeln der ersten URL in die zweite URL durch eine Domainweiterleitung oder einen automatischen Aufruf der zweiten URL über einen in der durch die erste URL aufgerufenen Webseite eingebetteten http-refresh-Befehl erfolgt.

5. Verfahren nach einem der vorigen Ansprüche, wobei der Aufruf der ersten URL eine Angabe eines User-Agents umfasst, wobei der erste Server die Umwandlung der ersten URL in die zweite URL in Abhängigkeit von der Angabe des User-Agents durchführt, wobei die zweite URL spezifisch für den User-Agent ist.

6. Verfahren nach Anspruch 5, wobei der User-Agent eine Angabe der Version des Betriebssystems des mobilen Telekommunikationsgeräts (100) umfasst, wobei der erste Server die Umwandlung der ersten URL in die zweite URL in Abhängigkeit von der Angabe der Version des Betriebssystems durchführt, wobei die zweite URL spezifisch für die Version des Betriebssystems ist.

7. Verfahren nach einem der vorigen Ansprüche 5 oder 6, wobei der User-Agent eine Angabe einer Hardwareinformation des mobilen Telekommunikationsgeräts (100) umfasst, wobei der erste Server die Umwandlung der ersten URL in die zweite URL in Abhängigkeit von der Angabe der Hardwareinformation durchführt, wobei die zweite URL spezifisch für die Hardwareinformation ist.

8. Verfahren nach einem der vorigen Ansprüche, wobei das Verfahren ferner ein Prüfen durch dasSTK (111) umfasst, ob die SIM-Karte (102) zum ersten Mal durch das mobile Telekommunikationsgerät (100) oder zum ersten Mal für das Betriebssystem des mobilen Telekommunikationsgeräts (100) verwendet wird, wobei der die erste URL angebende Launch-Browser Befehl ausschließlich dann an das mobile Telekommunikationsgerät (100) gesendet wird, wenn die Prüfung ergibt, dass die SIM-Karte (102) zum ersten Mal durch das mobile Telekommunikationsgerät (100) oder zum ersten Mal für das Betriebssystem des mobilen Telekommunikationsgeräts verwendet wird.

9. Computerprogrammprodukt mit von einem Prozessor ausführbaren Instruktionen zur Durchführung der Schritte gemäß dem Verfahren nach einem der vorigen Ansprüche.

## Claims

1. A method for installing an application (132) on a mobile telecommunication device (100), wherein the mobile telecommunication device (100) has a SIM card (102), wherein the SIM card (102) has a SIM Application Toolkit, STK (111), wherein the method comprises:
- transmitting the launch browser command of the STK (111) from the SIM card (102) to the mobile telecommunication device (100), wherein the launch browser command specifies a first URL, wherein the first URL is stored predefined on the SIM card (102), wherein the first URL refers immediately and directly to a first server (126) in a network (142), wherein the first URL does not refer to the application (132) to be installed,
- once the launch browser command has been received by the mobile telecommunication device (100), requesting the first URL by a browser (120) of the mobile telecommunication device via the network (142),
- receiving the request of the first URL by the first server and converting the first URL into a second URL by the first server (126), wherein the second URL refers to the application (132), wherein the conversion of the first URL into the second URL occurs so that the conversion can be determined by the browser (120) of the mobile telecommunication device (100),
- determining the conversion by the mobile telecommunication device (100) and, on the basis of this determination, requesting the second URL via the network (142) by the browser (120) of the mobile telecommunication device, wherein, on account of the request of the second URL, the mobile telecommunication device (100) prevents the request and transmits the second URL to an Internet sales portal application (122) of the mobile telecommunication device, wherein the Internet sales portal application (122) is designed for the management of applications installed on the mobile telecommunication device (100),
- requesting the second URL via the network by the Internet sales portal application (122), wherein, on account of the request of the second URL, the application (132) is transmitted by the first server (126) to the mobile telecommunication device (100) via the network (142),
- installing the application (132) on the mobile telecommunication device (100).

2. The method according to claim 1, wherein the request of the second URL is prevented automatically by an operating system of the mobile telecommunication device.

3. The method according to either one of the preceding claims, wherein the second URL refers to a second server (128), wherein the application (132) is stored on the second server (128) such that it can be retrieved under the URL.

4. The method according to any one of the preceding claims, wherein the first URL is converted into the second URL by a domain forwarding or an automatic request of the second URL via an http refresh command embedded in the website requested by the first URL.

5. The method according to any one of the preceding claims, wherein the request of the first URL comprises a specification of a user agent, wherein the first server performs the conversion of the first URL into the second URL depending on the specification of the user agent, wherein the second URL is specifically for the user agent.

6. The method according to claim 5, wherein the user agent comprises a specification of the version of the operating system of the mobile telecommunication device (100), wherein the first server performs the conversion of the first URL into the second URL depending on the specification of the version of the operating system, wherein the second URL is specific for the version of the operating system.

7. The method according to either one of preceding claims 5 or 6, wherein the user agent comprises a specification of a hardware information of the mobile telecommunication device (100), wherein the first server performs the conversion of the first URL into the second URL depending on the specification of the hardware information, wherein the second URL is specific for the hardware information.

8. The method according to any one of the preceding claims, wherein the method also comprises a check by the STK (111) as to whether the SIM card (102) is being used for the first time by the mobile telecommunication device (100) or for the first time for the operating system of the mobile telecommunication device (100), wherein the launch browser command specifying the first URL is transmitted to the mobile telecommunication device (100) only if the check reveals that the SIM card (102) is being used for the first time by the mobile telecommunication device (100) or for the first time for the operating system of the mobile telecommunication device.

9. A computer program product with instructions that can be executed by a processor in order to carry out the steps in accordance with the method according to any one of the preceding claims.

## Revendications

1. Procédé d'installation d'une application (132) sur un appareil de télécommunication mobile (100), où l'appareil de télécommunication mobile (100) présente une carte SIM (102), où la carte SIM (102) présente une boîte à outils d'application SIM, STK (111), où le procédé comprend :
- l'envoi de la commande du navigateur de démarrage de la STK (111) de la carte SIM (102) vers l'appareil de télécommunication mobile (100), où la commande de navigateur de démarrage indique une première adresse URL, où la première URL est stockée prédéfinie sur la carte SIM (102), où la première URL renvoie immédiatement et directement à un premier serveur (126) dans un réseau (142), où la première URL ne renvoie pas à l'application (132) à installer,
- après la réception de la commande du navigateur de démarrage par l'appareil de télécommunication mobile (100), l'appel de la première URL par le navigateur (120) de l'appareil de télécommunication mobile par le biais du réseau (142),
- la réception de l'appel de la première URL par le premier serveur et la transformation de la première URL en une deuxième URL par le premier serveur (126), où la deuxième URL renvoie à l'application (132), où la transformation de la première URL en la deuxième URL a lieu de telle manière que la transformation peut être constatée par le navigateur (120) de l'appareil de télécommunication mobile (100),
- le constat de la transformation par l'appareil de télécommunication mobile (100) et en raison de ce constat, l'appel de la deuxième URL par le biais du réseau (142) par le navigateur (120) de l'appareil de télécommunication mobile, où, en raison de l'appel de la deuxième URL, l'appareil de télécommunication mobile (100) empêche l'appel et transmet la deuxième URL à une application d'un portail de vente sur internet (122) de l'appareil de télécommunication mobile, où l'application du portail de vente par internet (122) est conçue pour la gestion d'applications installées sur l'appareil de télécommunication mobile(100),
- l'appel de la deuxième URL par le biais du réseau par l'application du portail de vente par internet (122), où, en raison de l'appel de la deuxième URL, l'application (132) est transférée par le premier serveur (126) sur l'appareil de télécommunication mobile (100) par le biais du réseau (142),
- l'installation de l'application (132) sur l'appareil de télécommunication mobile (100).

2. Procédé selon la revendication 1, dans lequel l'empêchement de l'appel de la deuxième URL est effectué automatiquement par un système de fonctionnement de l'appareil de télécommunication mobile.

3. Procédé selon l'une des revendications précédentes, dans lequel la deuxième URL renvoie à un deuxième serveur (128), où l'application (132) est stockée sur le deuxième serveur (128) en pouvant être appelée sous l'URL.

4. Procédé selon l'une des revendications précédentes, dans lequel la transformation de la première URL en la deuxième URL a lieu par une transmission de domaine ou un appel automatique de la deuxième URL par le biais d'une commande de rafraîchissement de http incorporée dans la page web appelée par la première URL.

5. Procédé selon l'une des revendications précédentes, dans lequel l'appel de la première URL comprend une indication d'un agent utilisateur, où le premier serveur exécute la transformation de la première URL en la deuxième URL en fonction de l'indication de l'agent utilisateur, où la deuxième URL est spécifique pour l'agent utilisateur.

6. Procédé selon la revendication 5, dans lequel l'agent utilisateur comprend une indication de la version du système de fonctionnement de l'appareil de télécommunication mobile (100), où le premier serveur exécute la transformation de la première URL en la deuxième URL en fonction de l'indication de la version du système de fonctionnement, où la deuxième URL est spécifique pour la version du système de fonctionnement.

7. Procédé selon l'une des revendications précédentes 5 ou 6, dans lequel l'agent utilisateur comprend une indication d'une information concernant le matériel de l'appareil de télécommunication mobile (100), où le premier serveur exécute la transformation de la première URL en la deuxième URL en fonction de l'indication de l'information concernant le matériel, où la deuxième URL est spécifique pour l'information concernant le matériel.

8. Procédé selon l'une des revendications précédentes, où le procédé comprend en outre une vérification, par la STK (111), si la carte SIM (102) est employée la première fois par l'appareil de télécommunication mobile (100) ou est employée pour la première fois pour le système de fonctionnement de l'appareil de télécommunication mobile(100), où la commande du navigateur de démarrage indiquant la première URL est envoyée exclusivement à l'appareil de télécommunication mobile (100) si la vérification a pour résultat que la carte SIM (102) est employée pour la première fois par l'appareil de télécommunication mobile (100) ou pour la première fois pour le système de fonctionnement de l'appareil de télécommunication mobile.

9. Produit de programme informatique doté d'instructions exécutables par un processeur pour l'exécution des étapes d'après un procédé selon l'une des revendications précédentes.
